# EUROPEAN PATENT APPLICATION

(11) **EP 4 737 231 A1**
(43) Date of publication of application: **06.05.2026**
(21) Application number: 24210644.1
(22) Date of filing: 04.11.2024
(51) Int. Cl.: B60T 8/17, B60T 8/172, B60T 8/88, B60T 17/22

(54) **A METHOD AND A CONTROL UNIT FOR CONDITIONING OF A FRICTION PAIRING OF A TRAILER BRAKING SYSTEM**

(71) Applicant: KNORR-BREMSE Systeme für Nutzfahrzeuge GmbH, 80809 München (DE)
(72) Inventor: FRY, Matthew, North Somersec, BS48 1PP (GB); PHAL, Stefan, 82256 Fürstenfeldbruck (DE)

(57) **Abstract**

A method for conditioning a friction pairing of a brake system of a vehicle (10, 11) is disclosed, wherein the brake system is adapted to show a predetermined brake performance in a standard mode of operation, when the friction pairing has at least a minimum level of actuation. The method comprises the steps: obtaining a level of actuation applied to the friction pairing; comparing the level of actuation applied to the friction pairing with the minimum level of actuation and based on a result of the comparing switching from the standard operation mode to a reconditioning operation mode, when the level of actuation is above the minimum level of actuation , wherein in the reconditioning operation mode a minimum pressure (p0) in a brake chamber (16) utilized to actuate the braking is higher than that in the standard mode of operation.

## Description

The present invention relates to a method and a control unit for conditioning a friction pairing of a brake system of a vehicle and, in particular, to a method for conditioning of friction pairing on an O3/O4 trailer (trailer with gross weight exceeding 3.5/10 tons).

Modern commercial motor vehicles are fitted with auxiliary braking systems such as hydraulic or electric retarders and engine brakes. Auxiliary brakes are used, where appropriate, to recover braking energy as useful energy and to prolong the life of service brakes. On the other hand, vehicles comprise a service brake for regular braking actuation. The braking actuation of the service brake utilizes friction pairings that rotate relative to each other and dissipate kinetic energy of the vehicle into heat.

However, when frequently using the auxiliary brake system, less energy will be imposed into the friction pairing of the wheel brakes of both the motor vehicle as well as the trailer. If those friction pairing are not regularly used as such, the friction pairing will never be confronted with a significant amount of energy being imposed into the friction pairing and will therefore not be heated up but rather stay cold (<100°C). As a result, their friction coefficient will change which then results in a deterioration of the braking performance.

There are some conventional methods known to overcome this problem and to maintain the optimal friction of the brake components. For example, EP 2159117B1 discloses a method for reconditioning the friction pairing of a transport vehicle using five operating modes to prioritize the different braking systems. Another example is disclosed in US 10,654,462 B2, where the temperature of the brake component of a trailer is monitored after braking operation. A thermal overloading is avoided by distributing brake actions among the axles or between the trailer and the towing vehicle.

These technologies are based on static measurements. Static measurements have several disadvantages, for example the system to perform the reconditioning has to be permanently activate or has to be activated for a certain period of time or distance, and if the automatic activation is not successful, it has to be manually activated. Therefore, the known systems are not able to provide a reliable conditioning method for the friction pairing that are occasionally used during the brake, in particular of a heavy-duty vehicle with a trailer.

Therefore, there is a demand for a method for reconditioning the friction pairing of vehicles and for a reliable reconditioning method.

At least some of the problems as described before are overcome by a method for reconditioning according to claim 1 and the using of the control unit of claim 11. The dependent claims refer to further advantageous realization of the subject matters defined in the independent claims.

The present invention relates to a method for conditioning a friction pairing of a brake system of a vehicle. The brake system is adapted to show, in a standard mode of operation, a predetermined brake performance when a minimum level of actuation is applied to the friction pairing. The method for conditioning a friction pairing comprises the following steps:
- obtaining a level of actuation applied to the friction pairing,
- comparing the level of actuation applied to the friction pairing with the minimum level of actuation, and
- based on a result of the comparing, switching from the standard operation mode to a reconditioning operation mode, when the level of actuation is above the minimum level of actuation.

It is understood that the (minimum) level of actuation depends on the desired deceleration and of other external parameters (load, slope of road, tires etc.). However, for a desired deceleration and for given external parameters the brake system - when the brake system operates correctly (normal mode of operation) - needs a particular brake actuation to achieve the desired deceleration. If the brake system has to be actuated more strongly for the desired deceleration, the friction provided by the friction pairing might be insufficient. This should be corrected. One reason for the insufficient friction is the insufficient temperature of the friction pairing. According to embodiments, this correction is provided by the reconditioning mode.

In the reconditioning operation mode a minimum pressure in a brake chamber utilized by the braking system to actuate the braking is higher than that in the standard mode of operation (which may be zero in normal driving condition). By this, a small friction effect will be caused to apply energy into the friction pairing and therefore generate heat which in turn increases the temperature of the friction pairing.

Optionally, the level of actuation applied to the friction pairing may represent a degree of actuation and may be derived from at least one of the following:
- an actuation energy;
- a braking force;
- a braking pressure (e.g. in the brake actuator);
- a degree of actuation of the brake pedal.

The actuation energy as a parameter defining the level of actuation or the degree of actuation applied to the friction pairing may be calculated from parameters such as an input force, a brake dimensions, a vehicle speed, a duration of the brake application, etc. The actuation level of the brake actuator may also be determined from an electrical energy consumed by the brake actuator (e.g., for electro-motoric brakes). Therefore, the brake system may be adapted to detect or to derive (calculate) the level of actuation of the friction pairing.

The level of actuation may be determined based on sensor data from at least one the following sensors:
- position sensor (e.g. for a piston or the brake pedal);
- a force sensor (e.g. exerted by a brake actuator);
- a pressure sensor (e.g. measuring the pressure in the brake chamber);
- a voltage and/or current sensor (e.g. measuring consumed electric braking energy).

The level of actuation of the brake is associated with an energy dissipation and thus with an increase in the temperature of the friction pairing. Using the level of actuation (e.g. the consumed energy during the braking) instead of the temperature provides the advantage that quantities such as energy, force, pressure can be easier determined than the temperature of the friction pairing. For example, the temperature might only be available for a short snapshot, depending on the surrounding conditions (wind, temperature etc.). Measuring the temperature with dedicated measurement equipment might be technically complicated because of the rotations and the strong forces acting at the friction pairing. In addition, brakes are safety relevant components so that regulations often forbid any modifications to available brake system (e.g. adding a temperature sensor). In contrast hereto, the exemplary energy that has been imposed into the friction pairing would have the advantage that this value can be calculated from parameters mentioned above (like the input force, the brake dimensions, the vehicle speed, the duration of the brake application). These parameters are available in the vehicle.

The temperature of the friction pairing would then be a resultant value. Nevertheless, further embodiments also determine or derive the temperature to enable a control also based on the temperature. In this case, it is of advantage to use a difference of temperatures (e.g. by comparing it to a starting point) so that the control may become independent on the outside conditions.

Therefore, optionally, the method may include a step of obtaining the temperature or a temperature difference (to a reference temperature) of the friction pairing which may include one or more of the following:
- the temperature is measured by using a temperature measuring unit,
- the temperature is sensed by a temperature sensor,
- the temperature is calculated by a temperature-calculation model (e.g. a vehicle model),
- the temperature is detected by a temperature detector,
- the temperature is estimated by a temperature estimation means,
- the temperature is derived from a temperature signal,
- the temperature is determined by using a temperature determining apparatus.

The reference temperature may be a starting temperature (e.g. when the process of monitoring the brake system starts) or an average temperature. According to embodiments, this obtained temperature may then be compared with a minimum temperature for which the brake system is expected to show a normal brake performance.

The vehicle model describes the behavior of the vehicle during operation and may predict a resulting deceleration when a given actuation force (or pressure) is applied to the friction pairing. The corresponding characteristic will depend on the temperature and/or the amount of energy and/or the level of actuation that has been applied to the friction pairing recently. In other words, by sensing the brake actuation (the applied pressure, force, or electrical energy) and the resulting deceleration, it is possible to indirectly derive or calculate the temperature of the friction pairing.

The service brake may include a drum brake or disc brake and friction pairing may include a brake lining or brake pads, a brake disc, a drum etc. For example, the types of friction pairings may be drum/brake shoes and disk/brake pad. The service brake may, in particular, form part of a brake system of a commercial vehicle trailer.

Optionally, the method for reconditioning comprises the steps:
- during the reconditioning operation mode, comparing the level of actuation applied to the friction pairing with a sufficient level of actuation, and/or
- based on a result of the comparing, switching from the reconditioning operation mode to the standard operation mode, when the level of actuation is below the sufficient level of actuation.

Optionally, the minimum level of actuation and the sufficient level of actuation applied to the friction pairing may be maintained in a predetermined range. Same applies to the temperature which may be kept in a predetermined range for best performance (e.g. > 100°C). The sufficient level of actuation should be lower than or be equal to the minimum level of actuation. The minimum level of actuation may be vehicle dependent and a testing may ensure that a proper value is used for the particular vehicle. The sufficient level of actuation may be the level of actuation where a maximal friction force is expected (for given deceleration and external parameters).

As mentioned before, the temperature may also be utilized as control parameter. In this case, the step of obtaining the temperature further includes at least one of the following steps:
- receiving sensor data of a temperature sensor adapted to measure the temperature,
- calculating the temperature based on a measured deceleration in response to an applied brake actuation (e.g. a pressure in the brake chamber) utilizing a vehicle model,
- determining an average temperature of the friction pairing based on an averaging of the temperature.

The temperature sensor may also be arranged to estimate the temperature of the friction components by measuring the temperature of the disk or drum or using a radiation measurement. For example, a thermal radiation measurement using an infrared camera or similar devices may be utilized. The temperature sensor may be thermally connected to the friction pairing or mounted at the support assembly of braking shoes or braking pads. The temperature of the friction pairing may fluctuate, and the fluctuation may occur at standstill (steady state), on lower velocities or on higher velocities. Therefore, the temperature sensor is configured to measure the current temperature the friction pairing and advantageously performs an averaging.

Optionally, the step of obtaining the level of actuation may also include an averaging over multiple measurements or multiple determination steps. Optionally, the step of determining the average (of the temperature or the level of applied actuation of the friction pairing) includes averaging based on a predetermined time and/or predetermined distance and/or a predetermined number of measurements. The average may comprise at least one of a median value, and a mean value. The average may be calculated from multiple actuation data obtained over multiple time and/or distance instances and over at least one particular time and/or distance of interest. For example, the averaging may be based on a predetermined time or multiple measurements collected over some time. In one embodiment, the multiple time instances are separated by regular time intervals, for example in every 5 s, 10 s, 20 s, 2 min, 5 min, 10 min etc. According to further embodiments, the averaging is based on a predetermined distance or based on multiple measurements collected over some distance. In one embodiment, the multiple distance instances are separated by regular distance intervals, for example in every 10 m, 50 m, 100 m, 200 m, 500 m, etc.

The preferred frequency of measurement over at least one particular time and/or distance of interest may be included into the braking software of the trailer.

According to further embodiments, an inherent averaging may be utilized. For example, the distance to braking shoes or to the braking pad may cause an inherent averaging effect.

Optionally, in the standard operation mode the pressure level of the brake chamber is being reduced to 0 bar as minimum pressure. Optionally, in the reconditioning operation mode, the pressure level of the brake chamber is being reduced between 0.4 to 1 bar as minimum pressure. The minimum pressure may be obtained weighing two effect: On one hand, the driver should not notice any differences compared to the use of the standard operation mode, i.e. a braking action should not be noted. On the other hand, the minimum pressure is set to generate sufficient heat during operation to ensure that the critical situation of a cold brake is overcome sufficiently fast. For example, the minimum pressure may also be defined by causing decelerations of up to 0.1 m/s² or up to 0.5 m/s² or up to 1 m/s². A person skilled in art is aware of decelerations that will not be interpreted by the driver as unexpected brake actions. The rate of deceleration depends also very much on the vehicle and the situation.

When the level of actuation applied to (or the temperature of) the friction pairing is below (or above) the sufficient level of actuation (sufficient temperature), the control unit is configured to switch from the reconditioning operation mode back to the standard operation mode.

It should be understood, according to embodiments, the minimum pressure level is applied to the brake chamber - not to the control pressure level (used for triggering a brake actuation). For example, the control pressure may be maintained in the range 0 bar to 3 bar for the best performance. However, according to further embodiments, also the control pressure can be modified to allow a non-zero minimum control pressure to trigger the desired heat generation.

During the reconditioning operation mode, the vehicle may be driven at a variety of speeds and the brakes may be applied as in the standard mode of operation. The minimum pressure does not contravene the normal braking actuations, i.e. the different wheels are braked as in the standard mode of operation. After braking actuations, the reconditioning operation mode can maintain the minimum pressure to ensure a heat generation. However, in many cases a braking actuation will increase the temperature above the sufficient temperature so that embodiments will automatically return to the standard mode of operation. However, when no braking action is applied, the reconditioning mode results in a frictional heating of the friction surface (friction pairings), thus increasing the temperature of the friction pairing, however, without noticeably reducing the speed of the vehicle.

Optionally, the reconditioning method further comprises that the step of obtaining the level of actuation (or the temperature) is repeated. During the reconditioning operation mode the step of obtaining the level of actuation (or the temperature) may be repeated more frequently than during the standard operating mode. The level of actuation measurement (or the temperature) during the reconditioning operation mode can also be performed continuously or intermittently. Likewise, the step of averaging the temperature or the level of actuation applied to the friction pairing may be calculated more frequently in the reconditioning operation mode than in the standard operation more. This provides the advantage that the vehicle operates in the reconditioning operation mode only as long as it is needed. Furthermore, the system can react quickly on a regular brake actuation that may strongly change the temperature of the friction pairing.

Optionally, the reconditioning method further comprises a step of testing (a calibrating) a brake performance for different level of actuation applied to the braking pairing and determining the minimum level of actuation based on the testing. For example, the optimal level of actuation applied to the friction brakes may vary over time and it is desired to determine the minimum level of actuation based on the testing. Same testing may apply when the temperature is the control parameter. The predetermined minimum optimum level of actuation applied to the friction pairing may be stored in a computer-readable storage device, on the memory of a control unit or in a cloud storage system.

This method may also be implemented in software or as a computer program product. The order of steps may not be important to achieve the desired effect. Embodiments of the present invention can, in particular, be in a control unit (ECU) or implemented by software or a software module in an ECU. Therefore, embodiment relate also to a computer program having a program code for performing the method, when the computer program is executed on a processor. Further embodiments relate to a computer-readable storage device with instructions stored thereon designed to cause an apparatus (e.g. a control unit of the vehicle/trailer) to carry out the reconditioning method when executed on a data processor.

Further embodiments relate to a control unit of the vehicle that may include a data processor and a memory with stored instructions that, when executed on the data processor, cause to carry out the steps of the reconditioning method.

Optionally, the vehicle includes a towing vehicle and a trailer and the brake system may be a trailer brake system. Then, the control unit may be designed to control (primarily) a vehicle operation of the towing vehicle. For example, the control unit may be any electronic control unit (ECU) installed on the towing vehicle or on the trailer (e.g. a brake control unit, a vehicle control unit, a steering control unit etc.) and additionally configured to provide the above described functions.

Further embodiments relate to a vehicle (e.g. a truck), wherein the vehicle may be a trailer, a towing vehicle, or a combination thereof. The trailer may also be a semi-trailer, a full trailer, a center-axle trailer, any other towed vehicle. It is understood that the vehicle or the trailer is not part of the claimed apparatus for reconditioning. Optionally, the vehicle may, for example, include a towing vehicle and a trailer and wherein the brake system is a trailer brake system. The control unit may be designed to control a vehicle operation of the towing vehicle. For example, the control unit may be in the trailer and may be connected to the other control units of the (towing) vehicle (e.g. via a vehicle network).

Optionally, the vehicle has a service brake system including a brake chamber to actuate a brake action with a control unit. The brake system may for example include a drum brake and/or a disc brake.

Therefore, embodiments solve the above-mentioned problems by implementing a reconditioning operation mode, in which a minimum (non-zero) pressure in the brake chamber is retained. The value of the control pressure may still be reduced to a zero value after the driver has initiated a brake action. The generated heat during the reconditioning mode will increase the temperature of the friction pairing and the reconditioning operation mode remain active as long as the level of actuation applied to the friction pairing is lower than that of the sufficient level of actuation.

Embodiments are suitable in particular for braking systems of road vehicles and trailer combinations, which are predominantly commercial vehicles (trucks) and trailers, but may also include small trailers and caravans, which may be towed by passenger cars and light vans, or for example articulated commercial vehicles comprising tractors and semi-trailers. The reconditioning operation mode is especially adapted for monitoring the working condition of service brakes of a trailer by monitoring the level of actuation applied to the friction pairing.

When compared to the conventional system, embodiments of the present invention provide the following advantages:
- Currently, there is no standardized reconditioning method of the friction pairing in a trailer of vehicle combination available that is able to automatically activate the reconditioning operation mode when the level of actuation applied to the friction pairing is not optimal.
- The trailer braking system can automatically activate the reconditioning operation mode based on the friction pairing condition to maintain a high performance of the brake components of transport vehicles.
- The driver is not distracted by a poorly performing brake system and can maintain a high level of attention on the road at all times, especially driving on unfavorable terrains (uneven surface, curves, downhill, etc.) or in poor weather conditions when the road is wet, snowy or icy as it takes much longer to come to a complete stop for a loaded trailer.

Some examples of the arrangement and/or methods will be described in the following by way of examples only, and with respect to the accompanying figures, in which:
- Fig. 1A: depicts a schematic flow chart for a method for conditioning a friction pairing of a brake system of a vehicle in standard operation mode according to an embodiment of the present invention;
- Fig. 1B: depicts a schematic flow chart for a method for conditioning a friction pairing of a brake system of a vehicle in reconditioning operation mode according to an embodiment of the present invention;
- Fig. 2: depicts a placement of the control unit on a vehicle with a trailer;
- Fig. 3: illustrates a graph of the temperature of the friction pairing as a function of time and/or distance.

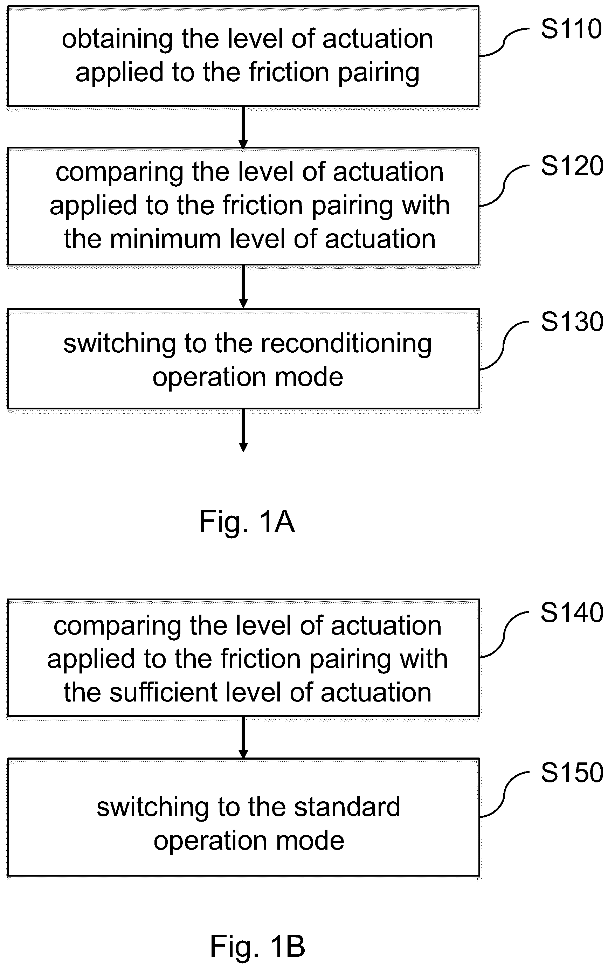

**Fig. 1A** depicts a schematic flow chart for a method for conditioning a friction pairing of a brake system of a vehicle 10, 11, 12 during the standard operation mode. The method includes the steps of:
- obtaining S110 a level of actuation applied to the friction pairing;
- comparing S120 the level of actuation applied to the friction pairing with a minimum level of actuation; and
- based on a result of the comparing, switching S130 from the standard operation mode to a reconditioning operation mode, when the level of actuation is above the minimum level of actuation.

The minimum level of actuation may be defined as a level of actuation below which a sufficient brake performance cannot be ensured due to insufficient friction force. During the standard operation mode of the (trailer) braking system, a control unit 14 may be configured to continuously determine the level of actuation applied to the friction pairing of the vehicle 10, 11, 12 (vehicle, towing vehicle, trailer or a vehicle combination). The control unit 14 may be configured to compute an average level of actuation over a predefined time and/or distance and the compare the average level of actuation with the minimum level of actuation. As set out before, alternatively or in in addition, the temperature may be utilized as control parameter. Both options of controlling are interchangeable. This applies also to the following description.

Depending on the type of operation mode, an information may be for example displayed on the display screen of the vehicle. The information can, for example, be placed on the driver's line of sight to inform the driver about the reconditioning operation mode. The information may be a visual signal, an acoustic signal or a combination thereof. The visually displayed signals may be icons, text or both. The acoustic signal may be a short acoustic signal source in the form of a loudspeaker, without having to install additional or further display devices within the vehicle.

The advantage of the signal information when the reconditioning operation mode is active is that the driver is informed. Based on this information, the driver may turn off the reconditioning operation mode, for example when driving uphill, and/or may manually switch back to the standard operation mode.

During the braking and by reducing the speed of the vehicle an excessive heat is generated due to friction between the friction pairing. Safety measurements are also relating to the optimum performance of the brake system, especially maintaining the optimum temperature of the friction pairing in every circumstance and recovering the energy generated by braking.

Consequently, embodiments are of benefit for providing a frequent level of actuation and temperature measurement of the friction pairing, therefore the high performance of the trailer braking system is maintained and the life of a service brake is prolonged. The present reconditioning method can be used for almost any trailer as in combination with a vehicle.

**Fig. 1B** depicts further, optional, step for the method for conditioning a friction pairing of a brake system of a vehicle 10, 11, 12 during the reconditioning operation mode. The method includes as further steps:
- comparing S140 the level of actuation applied to the friction pairing with a sufficient level of actuation; and
- based on a result of the comparing, switching S150 from the reconditioning operation mode to the standard operation mode, when the level of actuation is below the sufficient level of actuation.

During the reconditioning operation mode, the level of actuation applied to the friction pairing is dynamically monitored and the average level of actuation may be calculated based on the multiple measurement of the actual level of actuation and may be frequently compared to the sufficient level of actuation applied to the friction pairing.

Moreover, heat generated during the (normal) brake event will increase further the temperature of the brake components and more energy is imposed into the friction pairing maintaining the optimal braking performance. However, in cases when regular brake events are seldom or the auxiliary brakes (e.g. retarder) are extensively being used, the reconditioning mode will ensure a low temperature brake does not become a safety issue.

It is understood that the level of actuation is a parameter of the friction pairing in a trailer 12 or the towing vehicle 11 and the level of actuation is measured repeatedly within a predetermined time and/or predetermined distance intervals. Likewise, any of the steps of the described methods can be carried out repeatedly with a certain frequency.

A person skill in the art would readily recognize that at least some steps of described methods may be performed by programmed computers. Therefore, this method may also be a computer-implemented method and embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

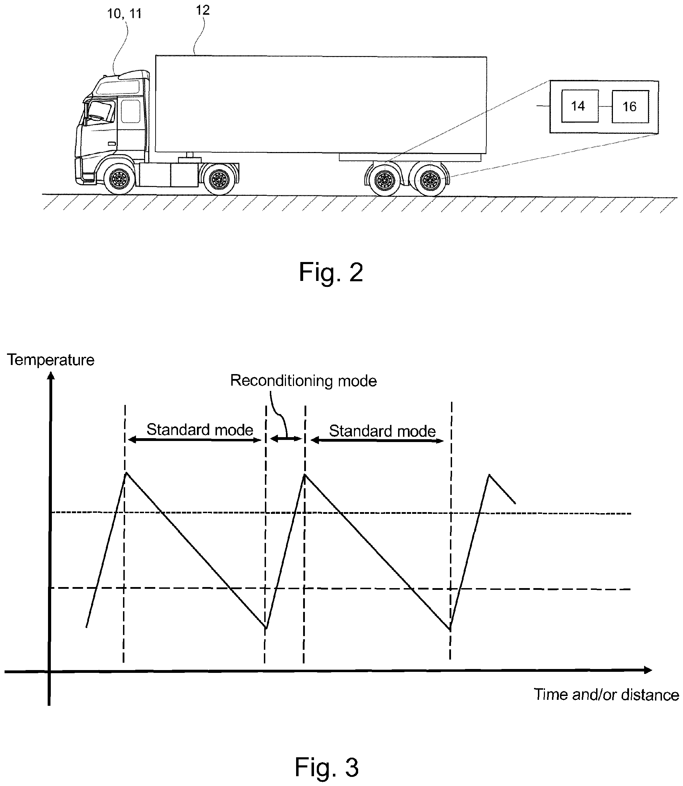

**Fig. 2** shows an overview on the vehicle 10 and/or towing vehicle 11 in combination with a trailer 12. It also indicates the control unit 14 and the brake chamber 16 on a vehicle and/or towing vehicle 11 in combination with a trailer 12.

It should be appreciated that the invention shall not be limited on one particular type of control unit 14, one particular type of brake chamber 16 or on one particular type of trailer 12. Thus, the at least one control unit 14 and at least one brake chamber 16 can be placed virtually anywhere on the trailer 12 as long as the conditioning of the friction pairing of a brake system of a vehicle can be carried out. Moreover, the control unit 14 may be connected to the brake chamber 16. Furthermore, the control unit 14 can be connected to the other control units of the vehicle 10 and/or towing vehicle 11 (e.g. via a vehicle network, e.g. a CAN bus).

Heavy duty vehicles such as trucks may be classified based on standards and the categorization of the trailers and semitrailers is based on their maximum mass. For example, category O3 refers to medium trailers with a maximum mass exceeding 3.5 tons, but not exceeding 10 tons. For example, category O4 refers to heavy trailers with a maximum mass exceeding 10 tons. Furthermore, trailers of categories O3 and O4 may be at least one of the three following type of trailers: semi-trailer, full trailer or center-axle trailer.

**Fig. 3** illustrates a graph of the temperature of the friction pairing as a function of time and/or distance. Moreover, the temperature of the friction pairing may also be illustrated as a function of a predetermined number of measurements. For simplicity, it is assumed that no regular brake actions are carried out. When the temperature drops below the minimum temperature, the monitoring of the temperature will trigger the reconditioning mode (the portions, where the temperature increases). If the temperature exceeds below the sufficient temperature, the monitoring of the temperature will exit the reconditioning mode (the portions, where the temperature slowly decreases).

There is a corresponding graph if not the temperature is the control parameter, but the level of actuation (or the energy). Also in this case, two thresholds may trigger the switching: exceeding an upper threshold will trigger the switch into the reconditioning mode (because the actuation level is unexpectedly high) whereas a dropping below a lower threshold may trigger a return into the normal mode of operation.

For this, the measurements of the level of actuation and/or the temperature should be sufficiently often, because of safety issues. For example, an unexpected brake performance degradation because of low temperature should be correctly detected more or less promptly.

The invention is not restricted to the presented frequency of measurements. Instead, it is also possible, when compared to the standard operating mode, that the level of actuation measurements of the friction pairing is performed with a frequency of measurements increased by a factor of 1.5, 2, 2.5, 3 etc. As a result, the duration of the reconditioning operation mode is shorter than in the standard operation more.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

### LIST OF REFERENCE SIGNS

- 10: vehicle
- 11: towing vehicle
- 12: trailer
- 14: control unit
- 16: brake chamber
- p0: minimum pressure

## Claims

1. A method for conditioning a friction pairing of a brake system of a vehicle (10), the brake system is adapted to show a predetermined brake performance in a standard mode of operation by applying pressure to a brake chamber (16), when a minimum level of actuation is applied to the friction pairing, the method comprising:
- obtaining (S110) a level of actuation applied to the friction pairing;
- comparing (S120) the level of actuation applied to the friction pairing with the minimum level of actuation; and
- based on a result of the comparing, switching (S130) from the standard operation mode to a reconditioning operation mode, when the level of actuation is above the minimum level of actuation,
wherein in the reconditioning operation mode a minimum pressure (p0) in the brake chamber (16) utilized to actuate the braking is higher than that in the standard mode of operation.

2. The method of claim 1, wherein the level of actuation applied to the friction pairing is derived from at least one of the following:
- an actuation energy;
- a braking force;
- a braking pressure;
- a degree of actuation of the brake pedal.

3. The method of claim 1 and 2, further comprising:
- during the reconditioning operation mode, comparing (S140) the level of actuation applied to the friction pairing with a sufficient level of actuation; and
- based on a result of the comparing, switching (S150) from the reconditioning operation mode to the standard operation mode, when the level of actuation is below the sufficient level of actuation .

4. The method according to any of claims 1 to 3, where the step of obtaining the level of actuation applied to the friction pairing includes at least one of the following:
- receiving sensor data of a sensor adapted to measure the level of actuation;
- determining an average level of actuation applied to the friction pairing based on an averaging of the level of actuation.

5. The method of claim 4, the step of determining an average includes one or more of the following:
- averaging based on a predetermined time,
- averaging based on a predetermined distance,
- averaging based on a predetermined number of measurements.

6. The method according to any of claims 1 to 5, wherein in the standard operation mode the pressure level of the brake chamber (16) is being reduced to 0 bar as minimum pressure (p0).

7. The method according to any one of claims 1 to 6, wherein, in the reconditioning operation mode, the pressure level of the brake chamber (16) is being reduced between 0.4 to 1 bar as minimum pressure (p0).

8. The method according to any of the claim1 to 7, further comprising repeating the step of obtaining the level of actuation applied to the friction paring and during the reconditioning operation mode it is repeated more frequently than during the standard operating mode.

9. The method according to any of claims 1 to 8, further comprising:
- testing a brake performance for different level of actuation applied to the braking pairing; and
- determining the minimum level of actuation based on the testing.

10. A computer-readable storage device having instructions stored thereon designed to cause an apparatus to carry out the method as claimed in claim 1 when the software code is executed on a data processor.

11. A control unit (14) of a vehicle (10) including a data processor and a memory with stored instructions that, when executed on the data processor, cause to carry out the steps of the method of any of claims 1 to 10.

12. The control unit (14) of claim 11, wherein the vehicle (10) includes a towing vehicle (11) and a trailer (12) and wherein the brake system is a trailer brake system and the control unit (14) is designed to control a vehicle operation of the towing vehicle (11).

13. A vehicle (10) with a service brake system including a brake chamber (16) to actuate a brake action,
**characterized by:**
a control unit (14) according to claim 11 or claim 12.

14. The vehicle according to claim 13, which is a trailer (12), towing vehicle (11), or a combination thereof.
